# EUROPÄISCHE PATENTSCHRIFT

(11) **EP 3 487 721 B1**
(45) Veröffentlichungstag und Bekanntmachung des Hinweises auf die Patenterteilung: **29.12.2021**
(21) Anmeldenummer: 16794553.4
(22) Anmeldetag: 04.11.2016
(51) Int. Cl.: B60K 6/48, B60K 6/365, B60K 6/547, F16H 3/72, F16H 3/64

(54) **GETRIEBEANORDNUNG FÜR EIN HYBRIDFAHRZEUG, ANTRIEBSSYSTEM UND HYBRIDFAHRZEUG**
TRANSMISSION ASSEMBLY FOR A HYBRID VEHICLE, DRIVE SYSTEM, AND HYBRID VEHICLE
ENSEMBLE DE TRANSMISSION DESTINÉ À UN VÉHICULE HYBRIDE, SYSTÈME D'ENTRAÎNEMENT ET VÉHICULE HYBRIDE

(30) Priorität: 22.07.2016 WO PCT/EP2016/067483
(43) Veröffentlichungstag der Anmeldung: 29.05.2019
(73) Patentinhaber: GKN Automotive Ltd., West Midlands, B37 7YE (GB)
(72) Erfinder: GASSMANN, Theodor, 53721 Siegburg (DE); HAUPT, Jan, 51515 Kürten (DE); ABBENHAUS, Moritz, 53842 Troisdorf (DE); HERBER, Sven, 50354 Hürth (DE); HILDEBRANDT, Wolfgang, 53721 Siegburg (DE)
(74) Vertreter: Rössler, Matthias
(86) Internationale Anmeldenummer: PCT/EP2016/076703
(87) Internationale Veröffentlichungsnummer: WO 2018/014983

(56) Entgegenhaltungen:
- EP-A1- 2 810 839
- DE-A1-102007 018 999
- DE-T5-112012 006 555
- FR-A1- 2 961 753
- US-A- 5 525 116

## Beschreibung

Die vorliegende Erfindung betrifft eine Getriebeanordnung für ein Hybridfahrzeug mit einer Verbrennungskraftmaschine und einer elektrischen Maschine. Die Getriebeanordnung dient der wahlweisen Übertragung eines Antriebsdrehmoments der elektrischen Maschine und/oder der Verbrennungskraftmaschine auf eine Antriebswelle des Hybridfahrzeugs. Die Antriebswelle des Hybridfahrzeugs ist zwischen der Getriebeanordnung und den Rädern des Hybridfahrzeugs angeordnet.

Aus der DE 10 2011 014 703 A1 ist eine Antriebseinrichtung für einen Kraftwagen bekannt, wobei über ein Getriebe sowohl eine Verbrennungskraftmaschine, als auch ein Elektromotor zum Antrieb des Kraftwagens eingesetzt werden können. Dabei ist das Getriebe ein Planetengetriebe mit Hohlrad, Sonnenrad und einem Planetenträger, wobei über das Hohlrad ein Drehmoment der Verbrennungskraftmaschine in das Planetengetriebe einleitbar ist. Über das Sonnenrad ist ein Drehmoment des Elektromotors in das Planetengetriebe einleitbar. Der Abtrieb erfolgt über den Planetenträger.

Aus der DE 10 2010 063 311 A1 ist eine Vorrichtung für einen Antriebsstrang eines Hybridfahrzeugs bekannt. Die Vorrichtung umfasst ein Planetengetriebe mit den Elementen Hohlrad, Sonnenrad, und Steg (Planetenträger), wobei hier eine elektrische Maschine über das Hohlrad ein Drehmoment in das Planetengetriebe einleitet und ein Verbrennungsmotor über das Sonnenrad. Der Abtrieb zu einem Getriebe erfolgt über den Steg.

Aus der DE 11 2012 006 555 T5 ist eine Leistungsübertragungsvorrichtung für ein Hybridfahrzeug bekannt.

Für derartige Antriebseinrichtungen für Hybridfahrzeuge, bei denen ein Antrieb des Kraftfahrzeuges über eine Verbrennungskraftmaschine und/oder eine elektrischen Maschine erfolgen soll, besteht das ständige Bedürfnis eine möglichst kompakte und für alle Betriebspunkte ausgelegte Getriebeanordnung bereitzustellen.

Hiervon ausgehend ist es Aufgabe der vorliegenden Erfindung, die im Zusammenhang mit dem Stand der Technik geschilderten Probleme wenigstens teilweise zu lösen. Es soll insbesondere eine kompakte Getriebeanordnung für ein Hybridfahrzeug vorgeschlagen werden, dass einerseits ein Summierungsgetriebe zur wahlweisen Einleitung eines Antriebsdrehmoments der elektrischen Maschine und/oder einer Verbrennungskraftmaschine und andererseits ein Schaltgetriebe zur Einstellung einer Übersetzung umfasst, wobei über die Getriebeanordnung die Antriebsdrehmomente von elektrischer Maschine und/oder Verbrennungskraftmaschine auf eine Antriebswelle des Hybridfahrzeugs übertragen werden.

Hierzu trägt eine Getriebeanordnung gemäß den Merkmalen des Patentanspruchs 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird eine Getriebeanordnung für ein Hybridfahrzeug mit einer Verbrennungskraftmaschine und einer elektrischen Maschine vorgeschlagen, wobei über die Getriebeanordnung ein erstes Antriebsdrehmoment der Verbrennungskraftmaschine und ein zweites Antriebsdrehmoment der elektrischen Maschine auf zumindest eine Antriebswelle des Hybridfahrzeugs übertragbar ist, wobei die Getriebeanordnung ein erstes Planetengetriebe mit den ersten Komponenten erstes Sonnenrad, erstes Hohlrad und erster Planetenträger umfasst, wobei über den ersten Planetenträger ein drittes Antriebsdrehmoment auf einen zweiten Planetenträger eines zweiten Planetengetriebes übertragbar ist, wobei das zweite Planetengetriebe die zweiten Komponenten zweiter Planetenträger, zweites Sonnenrad und drittes Sonnenrad aufweist, wobei das zweite Sonnenrad mit einer ersten Verzahnung eines zweiten Planetenrades und das dritte Sonnenrad mit einer zweiten Verzahnung des zweiten Planetenrades kämmt, wobei über das dritte Sonnenrad eine Antriebswelle des Hybridfahrzeugs antreibbar ist.

Die Antriebsdrehmomente werden über miteinander kämmende Verzahnungen der einzelnen Zahnräder der Getriebeanordnung übertragen. Das dritte Antriebsdrehmoment ist das erste Antriebsdrehmoment, das zweite Antriebsdrehmoment oder eine Summe von erstem und zweitem Antriebsdrehmoment. Dabei kann das zweite Antriebsdrehmoment auch negativ sein, wenn nämlich die elektrische Maschine als Generator oder in entgegengesetzter Drehrichtung betrieben wird, wobei dann das durch die Verbrennungskraftmaschine erzeugte erste Antriebsdrehmoment entsprechend reduziert wird.

Die Kombination zweier Planetengetriebe ermöglicht eine kompakte Bauform und insbesondere eine vorteilhafte Einstellung der Übersetzungen. Insbesondere wird über das erste Planetengetriebe eine Kopplung von Verbrennungskraftmaschine und elektrischer Maschine ermöglicht. Es kann also wahlweise ein erstes Antriebsdrehmoment der Verbrennungskraftmaschine, ein zweites Antriebsdrehmoment der elektrischen Maschine oder beide Antriebsdrehmomente zusammen auf das zweite Planetengetriebe übertragen werden. Weiter kann ein erstes Antriebsdrehmoment der Verbrennungskraftmaschine zumindest teilweise durch die als Generator betriebene elektrische Maschine in elektrische Energie umgewandelt und z. B. in einem Speicher des Hybridfahrzeugs gespeichert werden. Weiter kann über das erste Planetengetriebe die Verbrennungskraftmaschine in einem hinsichtlich des Verbrauchs optimalen Betriebspunkt betrieben werden, wobei durch einen Fahrer gewünschte Änderungen des dritten Antriebsdrehmoments oder einer Drehzahl der Antriebswelle durch die elektrische Maschine eingestellt werden können.

Über das zweite Planetengetriebe wird eine Übersetzung der von dem ersten Planetengetriebe vorgegebenen Drehzahl und des übertragenen dritten Antriebsdrehmoments realisiert. Dabei wird eine 2-Gang-Schaltung realisiert, es können also zwei verschiedene Übersetzungen zwischen dem ersten Planetengetriebe und der Antriebswelle über das zweite Planetengetriebe bereitgestellt werden.

Die zwei Planetengetriebe sind insbesondere unabhängig voneinander aufgebaut, d. h., dass das dritte Antriebsdrehmoment zwischen erstem Planetengetriebe und zweitem Planetengetriebe über zwei, jeweils miteinander kämmende Verzahnungen aufweisende, Komponenten übertragen wird, wobei die erste Komponente dem ersten Planetengetriebe und die zweite Komponente dem zweiten Planetengetriebe zugeordnet ist.

Bei einer anderen Ausgestaltung wird das dritte Antriebsdrehmoment zwischen erstem Planetengetriebe und zweitem Planetengetriebe über eine starre Verbindung übertragen. Dabei ist der erste Planetenträger auch als zweiter Planetenträger ausgeführt. Der erste Planetenträger trägt also die Wellen der ersten Planetenräder als auch die Wellen der zweiten Planetenräder.

Bevorzugt leitet die Verbrennungskraftmaschine das erste Antriebsdrehmoment über das erste Hohlrad in das erste Planetengetriebe ein.

Insbesondere leitet (dann) die elektrische Maschine das zweite Antriebsdrehmoment über das erste Sonnenrad in das erste Planetengetriebe ein.

Eine getauschte Anordnung (erstes Antriebsdrehmoment über das erste Sonnenrad, zweites Antriebsdrehmoment über das erste Hohlrad) ist auch möglich.

Die Verbrennungskraftmaschine ist über eine erste Kupplung mit dem ersten Hohlrad verbindbar. Die erste Kupplung ist insbesondere außerhalb eines Gehäuses der Getriebeanordnung angeordnet. Insbesondere ist die erste Kupplung eine Reibkupplung, die bevorzugt für eine Kopplung einer Verbrennungskraftmaschine und eines Getriebes auch sonst in bekannten Kraftfahrzeugen eingesetzt wird.

Insbesondere ist die Verbrennungskraftmaschine im rein elektrischen Betrieb (drittes Antriebsdrehmoment wird ausschließlich über die elektrische Maschine bereitgestellt) ausgekoppelt, d. h. die erste Kupplung ist dann geöffnet. Bei allen anderen Betriebsarten (drittes Antriebsdrehmoment wird über elektrische Maschine und Verbrennungskraftmaschine oder von Verbrennungskraftmaschine alleine bereitgestellt) ist die Verbrennungskraftmaschine angekoppelt, d. h. die erste Kupplung ist geschlossen.

Das erste Hohlrad ist insbesondere über eine zweite Kupplung mit einem Gehäuse der Getriebeanordnung drehfest verbindbar.

Drehfest verbindbar heißt insbesondere, dass nach der Verbindung beide Komponenten eine gleiche Drehzahl aufweisen. Hier wird also das erste Hohlrad an dem (nicht drehenden) Gehäuse der Getriebeanordnung festgelegt.

Die zweite Kupplung ist im rein elektrischen Betrieb (drittes Antriebsdrehmoment wird ausschließlich über die elektrische Maschine bereitgestellt) geschlossen, d. h. das erste Hohlrad ist am Gehäuse festgelegt. Bei allen anderen Betriebsarten (drittes Antriebsdrehmoment wird über elektrische Maschine und Verbrennungskraftmaschine oder von Verbrennungskraftmaschine alleine bereitgestellt) ist die zweite Kupplung geöffnet, d. h. das erste Hohlrad ist gegenüber dem Gehäuse drehbar.

Wenn das erste Hohlrad am Gehäuse festgelegt ist, wird über das erste Sonnenrad, das mit den Verzahnungen der auf dem ersten Planetenträger angeordneten ersten Planetenräder kämmt, der erste Planetenträger angetrieben. Der erste Planetenträger treibt über die miteinander kämmenden Verzahnungen den zweiten Planetenträger des zweiten Planetengetriebes an.

Insbesondere ist die zweite Kupplung nur vorgesehen, wenn das erste Antriebsdrehmoment über das erste Hohlrad und das zweite Antriebsdrehmoment über das erste Sonnenrad in das erste Planetengetriebe eingeleitet wird.

Gemäß einer weiteren Ausgestaltung wird das erste Antriebsdrehmoment (der Verbrennungskraftmaschine) über das erste Sonnenrad und das zweite Antriebsdrehmoment (der elektrischen Maschine) über das erste Hohlrad in das erste Planetengetriebe eingeleitet. Bei dieser Ausgestaltung ist bevorzugt keine zweite Kupplung vorhanden.

Für den rein elektrischen Betrieb (drittes Antriebsdrehmoment wird ausschließlich über die elektrische Maschine bereitgestellt) wird bei dieser Ausgestaltung die erste Kupplung geöffnet und die dritte Kupplung geschlossen. Die beiden anderen Ausgestaltungen benötigte Funktion der zweiten Kupplung ist hier nicht erforderlich.

Insbesondere sind zumindest zwei Komponenten des ersten Planetengetriebes über eine dritte Kupplung miteinander drehfest verbindbar. Insbesondere sind also z. B. das erste Sonnenrad mit dem ersten Hohlrad oder das erste Sonnenrad mit dem ersten Planetenträger drehfest verbindbar. Bevorzugt ist, dass der erste Planetenträger mit dem ersten Hohlrad drehfest verbindbar ist.

Insbesondere kann die dritte Kupplung (bevorzugt, wenn das zweite Antriebsdrehmoment über das erste Hohlrad in das erste Planetengetriebe eingeleitet wird) als formschlüssig wirkende Kupplung ausgelegt sein, z. B. als eine Klauenkupplung.

Insbesondere ist das zweite Sonnenrad über eine vierte Kupplung mit einem Gehäuse der Getriebeanordnung drehfest verbindbar. Hier wird also das zweite Sonnenrad an dem (nicht drehenden) Gehäuse der Getriebeanordnung festgelegt.

Die vierte Kupplung wird zur Einstellung einer gewünschten Übersetzung betätigt. Bei geöffneter vierter Kupplung, ist das zweite Sonnenrad gegenüber dem Gehäuse drehbar.

Insbesondere sind zumindest zwei Komponenten des zweiten Planetengetriebes über eine fünfte Kupplung miteinander drehfest verbindbar. Insbesondere sind also z. B. das zweite Sonnenrad mit dem zweiten Planetenträger oder das dritte Sonnenrad mit dem zweiten Sonnenrad drehfest verbindbar. Bevorzugt ist, dass das dritte Sonnenrad mit dem zweiten Planetenträger drehfest verbindbar ist. Bevorzugt ist auch, dass das zweite Sonnenrad mit dem zweiten Planetenträger drehfest verbindbar ist.

Insbesondere werden die vierte Kupplung und die fünfte Kupplung zur Einstellung einer gewünschten Übersetzung betätigt.

Insbesondere wird für eine erste Übersetzung die vierte Kupplung geschlossen und die fünfte Kupplung geöffnet. In diesem Fall wird das dritte Antriebsdrehmoment über den zweiten Planetenträger und die an dem zweiten Planetenträger angeordneten zweiten Planetenräder auf das dritte Sonnenrad übertragen, dass mit einer zweiten Verzahnung der zweiten Planetenräder kämmt.

Insbesondere wird für eine zweite Übersetzung die vierte Kupplung geöffnet und die fünfte Kupplung geschlossen. In diesem Fall wird das dritte Antriebsdrehmoment über den zweiten Planetenträger (direkt) auf das dritte Sonnenrad bzw. auf die das dritte Sonnenrad aufweisende Welle übertragen.

Insbesondere ist das dritte Sonnenrad durch das dritte Antriebsdrehmoment antreibbar, wobei das dritte Antriebsdrehmoment
a) ausschließlich von der Verbrennungskraftmaschine; oder
b) ausschließlich von der elektrischen Maschine; oder
c) von Verbrennungskraftmaschine und elektrischer Maschine bereitstellbar ist.

Insbesondere sind das erste Planetengetriebe und das zweite Planetengetriebe
a) nebeneinander; oder
b) entlang einer axialen Richtung hintereinander; oder
c) entlang einer axialen Richtung hintereinander mit koaxialer Anordnung von erstem Planetenträger und zweitem Planententräger angeordnet.

Die angeführten Kupplungen (erste Kupplung bis fünfte Kupplung) können hydraulisch, elektromechanisch oder auch elektrisch aktuiert werden. Insbesondere sind die Kupplungen als Reibkupplungen, z. B. als Lamellenkupplungen ausgeführt, die insbesondere kraftschlüssig wirken. Insbesondere können die Kupplungen auch als formschlüssig wirkende Kupplungen ausgeführt sein (z. B. als Klauenkupplung). Für formschlüssige Kupplungen ist insbesondere eine Synchronisierung der Drehzahlen der zu verbindenden Komponenten erforderlich. Diese Synchronisierung kann bevorzugt durch eine Regelung der elektrischen Maschine erfolgen.

Formschlüssige Verbindungen entstehen durch das Ineinandergreifen von mindestens zwei Verbindungspartnern. Dadurch können sich die Verbindungspartner auch ohne oder bei unterbrochener Kraftübertragung nicht voneinander lösen. Anders ausgedrückt ist bei einer formschlüssigen Verbindung der eine Verbindungspartner dem anderen im Weg.

Kraftschlüssige Verbindungen setzen eine Normal-Kraft auf die miteinander zu verbindenden Flächen voraus. Ihre gegenseitige Verschiebung ist verhindert, solange die durch die Haftreibung bewirkte Gegen-Kraft nicht überschritten wird.

Gemäß einem weiteren Aspekt wird ein Antriebssystem mit einer Verbrennungskraftmaschine und einer elektrischen Maschine sowie mit einer hier beschriebenen Getriebeanordnung vorgeschlagen

Bevorzugt leitet die Verbrennungskraftmaschine das erste Antriebsdrehmoment über das erste Hohlrad in das erste Planetengetriebe ein.

Insbesondere leitet (dann) die elektrische Maschine das zweite Antriebsdrehmoment über das erste Sonnenrad in das erste Planetengetriebe ein.

Eine getauschte Anordnung (erstes Antriebsdrehmoment über das erste Sonnenrad, zweites Antriebsdrehmoment über das erste Hohlrad) ist auch möglich.

In diesem Fall weist das Antriebssystem eine Verbrennungskraftmaschine, eine elektrische Maschine sowie eine (wie oben vorgeschlagene) Getriebeanordnung auf (insbesondere ohne die zweite Kupplung), wobei die Verbrennungskraftmaschine das erste Antriebsdrehmoment über das erste Sonnenrad in das erste Planetengetriebe einleitet und wobei die elektrische Maschine das zweite Antriebsdrehmoment über das erste Hohlrad in das erste Planetengetriebe einleitet.

Insbesondere ist die Verbrennungskraftmaschine über eine erste Kupplung mit dem ersten Sonnenrad verbindbar und zumindest zwei Komponenten des ersten Planetengetriebes aus der Gruppe: erstes Sonnenrad, erstes Hohlrad und erster Planetenträger sind über eine dritte Kupplung miteinander drehfest verbindbar; wobei Komponenten des ersten Planetengetriebes ausschließlich über die erste Kupplung und die dritte Kupplung mit weiteren Komponenten des Antriebssystems verbindbar sind (also ohne die zweite Kupplung). Bei dieser Ausgestaltung sind also lediglich die erste, dritte, vierte und fünfte Kupplung vorgesehen.

Soweit hier im Zusammenhang mit einer Kupplung eine "Verbindung" hergestellt werden kann, bedeutet das insbesondere, dass die Kupplung ihre zugeordneten Komponenten miteinander koppeln und/oder entkoppeln kann. Das heißt mit anderen Worten insbesondere, dass die Kupplung einen Wirkeingriff bezüglich der zugeordneten Komponenten realisieren und/oder trennen kann.

Bevorzugt ist die elektrische Maschine als Generator betreibbar, wobei ein erstes Antriebsdrehmoment der Verbrennungskraftmaschine zumindest teilweise oder ein viertes Antriebsdrehmoment der Antriebswelle über den Generator in elektrische Energie umwandelbar ist

Insbesondere sind die elektrische Maschine an einer ersten Seite und der Verbrennungsmotor an einer gegenüberliegenden zweiten Seite der Getriebeanordnung angeordnet. Insbesondere ist also zumindest das erste Planetengetriebe entlang einer axialen Richtung zwischen der elektrischen Maschine und der Verbrennungskraftmaschine angeordnet.

Gemäß einem weiteren Aspekt wird ein Hybridfahrzeug mit einer Verbrennungskraftmaschine und einer elektrischen Maschine sowie mit einer hier beschriebenen Getriebeanordnung vorgeschlagen, wobei die elektrische Maschine als Generator zum Aufladen eines Speichers für elektrische Energie und als Elektromotor zum Antrieb einer Antriebswelle des Hybridfahrzeugs betreibbar ist.

Die Getriebeanordnung stellt ein rekuperationsfähiges Multimode-Getriebe dar, das in einem zwei-gängigen CVT- (continuously variable transmission) Betriebsverfahren (elektrische Maschine auch als Generator betreibbar; Verbrennungskraftmaschine stellt erstes Antriebsdrehmoment, elektrische Maschine stellt zweites Antriebsdrehmoment bereit), einem zwei-gängigen verbrennungsmotorischen Betriebsverfahren (VM; drittes Antriebsdrehmoment entspricht erstem Antriebsdrehmoment), einem zwei-gängigen elektromotorischen Betriebsverfahren (EM; drittes Antriebsdrehmoment entspricht zweitem Antriebsdrehmoment) und in einem zwei-gängigen parallel-Betriebsverfahren (drittes Antriebsdrehmoment setzt sich aus erstem Antriebsdrehmoment und zweitem Antriebsdrehmoment zusammen) betreibbar ist. Im CVT-Betriebsverfahren kann ein elektrischer Speicher, z. B. ein Speicher des Hybridfahrzeugs, ohne zusätzlichen Generator während eines Fahrbetriebs des Hybridfahrzeugs geladen werden.

Im CVT-Betriebsverfahren stützt sich die Verbrennungskraftmaschine in niedrigen und mittleren Geschwindigkeitsbereichen an der elektrischen Maschine ab und betreibt sie so als Generator. Bei höheren Geschwindigkeiten wird die elektrische Maschine dann insbesondere aus dem Speicher des Hybridfahrzeugs gespeist und unterstützt die Verbrennungskraftmaschine in dem das erste Antriebsdrehmoment und das zweite Antriebsdrehmoment zu dem dritten Antriebsdrehmoment summiert werden. In Kombination mit der durch das zweite Planetengetriebe bereitgestellten zwei-Gängigkeit lassen sich sehr niedrige Kraftstoffverbräuche, aber auch hohe Zugkräfte und Geschwindigkeiten erreichen.

Im CVT-Betriebsverfahren kann eine Drehzahl des ersten Planetenträgers (und damit die Drehzahl des zweiten Planetenträgers und die der Antriebswelle) durch den Betrieb der elektrischen Maschine (Drehrichtung, Drehzahl, zweites Antriebsdrehmoment) verändert werden. Dadurch kann in einem bestimmten Drehzahlbereich der Antriebswelle die Verbrennungskraftmaschine in einem (für den Verbrauch) optimalen Betriebspunkt betrieben werden, wobei die geforderte Drehzahl und ggf. zusätzlich das geforderte dritte Antriebsdrehmoment durch die elektrische Maschine eingestellt bzw. bereitgestellt wird.

Die Schaltzustände der einzelnen Kupplungen (erste Kupplung bis fünfte Kupplung) sind für VM- und parallel-Betriebsverfahren gleich. Dies gilt insbesondere auch für die Ausgestaltung des Antriebssystems, bei der das zweite Antriebsdrehmoment über das erste Hohlrad in das erste Planetengetriebe eingeleitet wird und bei dem eine zweite Kupplung nicht vorgesehen ist.

Im verbrennungsmotorischen Betriebsverfahren sind die bereitgestellten Übersetzungen (Gänge) insbesondere sowohl auf die Anforderungen hinsichtlich der erreichbaren Höchstgeschwindigkeit, als auch auf minimalen Kraftstoffverbrauch ausgelegt.

In dem elektromotorischen Betriebsverfahren stellen die bereitgestellten Übersetzungen (Gänge) insbesondere sowohl die für das Anfahren erforderliche Zugkräfte, als auch die gewünschte erreichbare elektrische Höchstgeschwindigkeit (z. B. 130 km/h [Kilometer pro Stunde] im WLTP-Fahrzyklus (Worldwide Harmonized Light-Duty Vehicles Test Procedure) bei gleichzeitig hoher Effizienz zur Verfügung.

Im Folgenden werden für eine bevorzugte Ausgestaltung der Getriebeanordnung die Schaltzustände der einzelnen Kupplungen für das jeweilige Betriebsverfahren und die jeweilige Übersetzung (Anwahl eines Ganges) angegeben (hier wird insbesondere das erste Antriebsdrehmoment über das erste Hohlrad und das zweite Antriebsdrehmoment über das erste Sonnenrad in das erste Planetengetriebe eingeleitet):

| | CVT | CVT | VM | VM | EM | EM |
|---|---|---|---|---|---|---|
| | 1. Übers. | 2. Übers. | 1. Übers. | 2. Übers. | 1. Übers. | 2. Übers. |
| 1. Kuppl. | Geschl. | Geschl. | Geschl. | Geschl. | Offen | Offen |
| 2. Kuppl. | Offen | Offen | Offen | Offen | Geschl. | Geschl. |
| 3. Kuppl. | Offen | Offen | Geschl. | Geschl. | Offen | Offen |
| 4. Kuppl. | Geschl. | Offen | Geschl. | Offen | Geschl. | Offen |
| 5. Kuppl. | Offen | Geschl. | Offen | Geschl. | Offen | Geschl. |

- CVT:: CVT-Betriebsverfahren und paralleles Betriebsverfahren
- VM:: verbrennungsmotorisches Betriebsverfahren
- EM:: elektromotorisches Betriebsverfahren
- X. Übers.:: X. Übersetzung (erste oder zweite); also X. Gang (erster oder zweiter Gang)
- X. Kuppl.:: Schaltzustand jeder Kupplung
- Offen:: Kupplung offen; durch Kupplung verbindbare Komponenten drehen voneinander unabhängig
- Geschl.:: Kupplung geschlossen; durch Kupplung verbundene Komponenten sind miteinander drehfest verbunden

Insbesondere werden die folgenden Übersetzungen vorgeschlagen, die bevorzugt dafür gelten, dass das erste Hohlrad mit der Verbrennungskraftmaschine und das erste Sonnenrad mit der elektrischen Maschine verbunden sind:
1. Übersetzung Standgetriebe im ersten Planetengetriebe, entspricht dem Verhältnis von Drehzahl erstes Sonnenrad zu Drehzahl erstes Hohlrad bzw. dem Durchmesser erstes Hohlrad zu Durchmesser erstes Sonnenrad; negatives Vorzeichen, da resultierende Drehrichtungen von erstem Hohlrad und erstem Sonnenrad bei stehendem ersten Planetenträger gegensätzlich sind: -1,5 bis -5; insbesondere 2,0 bis 3,0; bevorzugt 2,1 bis 2,3.
2. Stufensprung zwischen der kleineren ersten Übersetzung und der größeren zweiten Übersetzung: 1 bis 3; insbesondere 1,5 bis 2,5; bevorzugt 2.
3. Vorübersetzung für Einleitung erstes Antriebsdrehmoment der Verbrennungskraftmaschine in das erste Planetengetriebe, z. B. auf das erste Hohlrad; und Vorübersetzung für Einleitung zweites Antriebsdrehmoment der elektrischen Maschine in das erste Planetengetriebe, z. B. auf das erste Sonnenrad: 0,5 bis 1,5; insbesondere 0,8 bis 1,2; bevorzugt 1 (keine Übersetzung).
4. Gesamtübersetzung der Getriebeanordnung; wobei
   a. als Anfahrübersetzung (Radschlupfgrenze bzw. Anfahrt an einer Bordsteinkante: zwischen 14 und 23;
   b. als Übersetzung für den größten Gang (abhängig von geforderter Höchstgeschwindigkeit und zur Erzielung eines möglichst geringen Verbrauchs: zwischen 2 und 7.
5. Gesamtübersetzung der Getriebeanordnung:
   a. Antrieb nur über elektrische Maschine:
      i. 1. Übersetzung (1. Gang): zwischen 20 und 23; insbesondere 21,5 bis 22;
      ii. 2. Übersetzung (2. Gang): zwischen 9 und 12; insbesondere 10, 5 bis 11;
   b. Antrieb nur über Verbrennungskraftmaschine:
      i. 1. Übersetzung (1. Gang): zwischen 6 und 8; insbesondere 6,5 bis 7;
      ii. 2. Übersetzung (2. Gang): zwischen 2 und 4; insbesondere 3 und 3,5.

Sind die elektrische Maschine über das erste Hohlrad und die Verbrennungskraftmaschine über das erste Sonnenrad mit dem ersten Planetengetriebe verbunden, kann die Getriebeanordnung auch ohne die zweite Kupplung eingesetzt werden. Im Folgenden sind Schaltzustände der einzelnen Kupplungen (zweite Kupplung nicht vorhanden) für das jeweilige Betriebsverfahren und die jeweilige Übersetzung (Anwahl eines Ganges) angegeben:

| | CVT | CVT | VM | VM | EM | EM |
|---|---|---|---|---|---|---|
| | 1. Übers. | 2. Übers. | 1. Übers. | 2. Übers. | 1. Übers. | 2. Übers. |
| 1. Kuppl. | Geschl. | Geschl. | Geschl. | Geschl. | Offen | Offen |
| 2. Kuppl. | Nicht vorhanden | | | | | |
| 3. Kuppl. | Offen | Offen | Geschl. | Geschl. | Geschl. | Geschl. |
| 4. Kuppl. | Geschl. | Offen | Geschl. | Offen | Geschl. | Offen |
| 5. Kuppl. | Offen | Geschl. | Offen | Geschl. | Offen | Geschl. |

Insbesondere werden die folgenden Übersetzungen vorgeschlagen, die bevorzugt dann gelten, wenn das erste Sonnenrad mit der Verbrennungskraftmaschine und das erste Hohlrad mit der elektrischen Maschine verbunden sind (das also das zweite Antriebsdrehmoment über das erste Hohlrad in das erste Planetengetriebe eingeleitet wird:
1. Übersetzung Standgetriebe im ersten Planetengetriebe, entspricht dem Verhältnis von Drehzahl erstes Sonnenrad zu Drehzahl erstes Hohlrad bzw. dem Durchmesser erstes Hohlrad zu Durchmesser erstes Sonnenrad; negatives Vorzeichen, da resultierende Drehrichtungen von erstem Hohlrad und erstem Sonnenrad bei stehendem ersten Planetenträger gegensätzlich sind: -1,5 bis -5; insbesondere 2,0 bis 3,0; bevorzugt 2,1 bis 2,3.
2. Stufensprung zwischen der kleineren ersten Übersetzung und der größeren zweiten Übersetzung: 1 bis 3; insbesondere 1,5 bis 2,5; bevorzugt 2.
3. Vorübersetzung für Einleitung erstes Antriebsdrehmoment der Verbrennungskraftmaschine in das erste Planetengetriebe, z. B. auf das erste Sonnenrad: bevorzugt 1 (keine Übersetzung); und Vorübersetzung für Einleitung zweites Antriebsdrehmoment der elektrischen Maschine in das erste Planetengetriebe, z. B. auf das erste Hohlrad: 0,5 bis 2,5; insbesondere 1,5 bis 2,2; bevorzugt 1,9.
4. Gesamtübersetzung der Getriebeanordnung; wobei
   a. als Anfahrübersetzung (Radschlupfgrenze bzw. Anfahrt an einer Bordsteinkante: zwischen 9 und 23;
   b. als Übersetzung für den größten Gang (abhängig von geforderter Höchstgeschwindigkeit und zur Erzielung eines möglichst geringen Verbrauchs: zwischen 2 und 7.
5. Gesamtübersetzung der Getriebeanordnung:
   a. Antrieb nur über elektrische Maschine:
      i. 1. Übersetzung (1. Gang): zwischen 9 und 23; insbesondere 10 bis 16;
      ii. 2. Übersetzung (2. Gang): zwischen 3 und 12; insbesondere 4 bis 8;
   b. Antrieb nur über Verbrennungskraftmaschine:
      i. 1. Übersetzung (1. Gang): zwischen 6 und 8; insbesondere 6,5 bis 7;
      ii. 2. Übersetzung (2. Gang): zwischen 2 und 4; insbesondere 3 und 3,5.

Die Ausführungen zu der Getriebeanordnung gelten gleichermaßen für das Antriebssystem und das Hybridfahrzeug und umgekehrt.

Vorsorglich sei angemerkt, dass die hier verwendeten Zahlwörter ("erste", "zweite", "dritte",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung in den Ansprüchen definiert ist und durch die gezeigten Ausführungsbeispiele nicht beschränkt werden soll. Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein Hybridfahrzeug mit einem Antriebssystem und einer Getriebeanordnung gemäß einer ersten Ausführungsvariante in vereinfachter Darstellung;
- Fig. 2:: das Antriebssystem mit der Getriebeanordnung gemäß Fig. 1 in vereinfachter Darstellung, wobei die Verteilung der Antriebsdrehmomente im CVT-Betriebsverfahren bei eingelegter erster Übersetzung dargestellt ist;
- Fig. 3:: die Getriebeanordnung gemäß Fig. 1 und 2 in einer Seitenansicht im Schnitt;
- Fig. 4:: das Antriebssystem mit Getriebeanordnung gemäß Fig. 1 bis 3 in vereinfachter Darstellung, wobei die Verteilung der Antriebsdrehmomente im EM-Betriebsverfahren bei eingelegter erster Übersetzung dargestellt ist;
- Fig. 5:: das Antriebssystem mit Getriebeanordnung gemäß Fig. 1 bis 4 in vereinfachter Darstellung, wobei die Verteilung der Antriebsdrehmomente im EM-Betriebsverfahren bei eingelegter zweiter Übersetzung dargestellt ist;
- Fig. 6:: eine Getriebeanordnung gemäß einer zweiten Ausführungsvariante in einer Seitenansicht im Schnitt;
- Fig. 7:: das Antriebssystem mit Getriebeanordnung gemäß Fig. 6 in vereinfachter Darstellung;
- Fig. 8:: eine Getriebeanordnung gemäß einer dritten Ausführungsvariante in einer Seitenansicht im Schnitt;
- Fig. 9:: das Antriebssystem mit Getriebeanordnung gemäß Fig. 8 in vereinfachter Darstellung; und
- Fig. 10:: das Antriebssystem mit Getriebeanordnung gemäß einer vierten Ausführungsvariante in vereinfachter Darstellung.

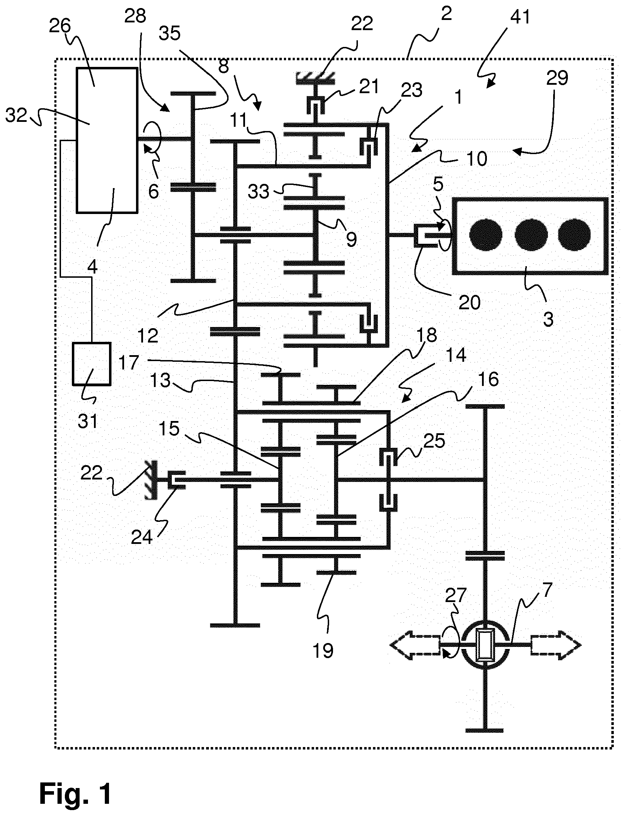

Fig. 1 zeigt ein Hybridfahrzeug 2 mit einem Antriebssystem 41 und einer Getriebeanordnung 1 gemäß einer ersten Ausführungsvariante in vereinfachter Darstellung. Das Hybridfahrzeug 2 umfasst eine Verbrennungskraftmaschine 3 und eine elektrische Maschine 4 sowie eine Getriebeanordnung 1, wobei die elektrische Maschine 4 als Generator 26 zum Aufladen eines Speichers 31 für elektrische Energie und als Elektromotor 32 zum Antrieb einer Antriebswelle 7 des Hybridfahrzeugs 2 betreibbar ist.

Die Getriebeanordnung 1 ist zur Übertragung eines ersten Antriebsdrehmoments 5 der Verbrennungskraftmaschine 3 und eines zweiten Antriebsdrehmoments 6 der elektrischen Maschine 4 auf eine Antriebswelle 7 des Hybridfahrzeugs 2 vorgesehen, wobei die Getriebeanordnung 1 ein erstes Planetengetriebe 8 mit den ersten Komponenten: erstes Sonnenrad 9, erstes Hohlrad 10 und erster Planetenträger 11 umfasst. Über den ersten Planetenträger 11 ist ein drittes Antriebsdrehmoment 12 auf einen zweiten Planetenträger 13 eines zweiten Planetengetriebes 14 übertragbar. Das zweite Planetengetriebe 14 weist die zweiten Komponenten: zweiter Planetenträger 13, zweites Sonnenrad 15 und drittes Sonnenrad 16 auf, wobei das zweite Sonnenrad 15 mit einer ersten Verzahnung 17 eines zweiten Planetenrades 18 und das dritte Sonnenrad 16 mit einer zweiten Verzahnung 19 (von der erste Verzahnung 17 unterschiedlich) des zweiten Planetenrades 18 kämmt, wobei über das dritte Sonnenrad 16 eine Antriebswelle 7 des Hybridfahrzeugs 2 antreibbar ist.

Die jeweiligen Antriebsdrehmomente 5, 6, 12 werden über miteinander kämmende Verzahnungen der einzelnen Zahnräder der Getriebeanordnung 1 übertragen. Das dritte Antriebsdrehmoment 12 entspricht dem ersten Antriebsdrehmoment 5, dem zweiten Antriebsdrehmoment 6 oder einer Summe von erstem Antriebsdrehmoment 5 und zweitem Antriebsdrehmoment 6. Dabei kann das zweite Antriebsdrehmoment 6 auch negativ sein, wenn nämlich die elektrische Maschine 4 als Generator 26 oder in einer entgegengesetzten Drehrichtung betrieben wird.

Über das erste Planetengetriebe 8 wird eine Kopplung von Verbrennungskraftmaschine 3 und elektrischer Maschine 4 ermöglicht. Es kann also wahlweise ein erstes Antriebsdrehmoment 5 der Verbrennungskraftmaschine 3, ein zweites Antriebsdrehmoment 6 der elektrischen Maschine 4 oder beide Antriebsdrehmomente 5, 6 zusammen auf das zweite Planetengetriebe 14 übertragen werden. Weiter kann ein erstes Antriebsdrehmoment 5 der Verbrennungskraftmaschine 3 zumindest teilweise durch die als Generator 26 betriebene elektrische Maschine 4 in elektrische Energie umgewandelt und in einem Speicher 31 des Hybridfahrzeugs 2 gespeichert werden. Weiter kann über das erste Planetengetriebe 8 die Verbrennungskraftmaschine 3 in einem hinsichtlich des Verbrauchs optimalen Betriebspunkt betrieben werden, wobei durch einen Fahrer gewünschte Änderungen des dritten Antriebsdrehmoments 12 oder einer Drehzahl der Antriebswelle 7 durch die elektrische Maschine 4 eingestellt werden können.

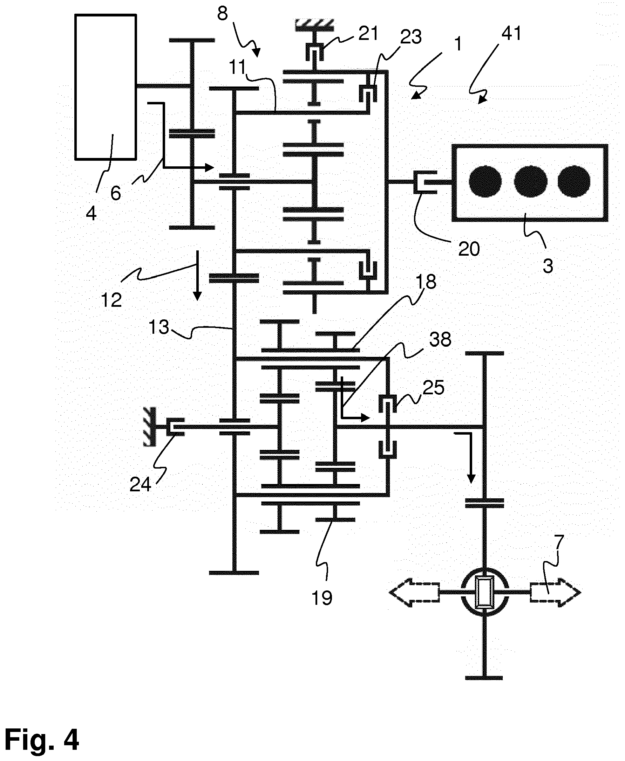

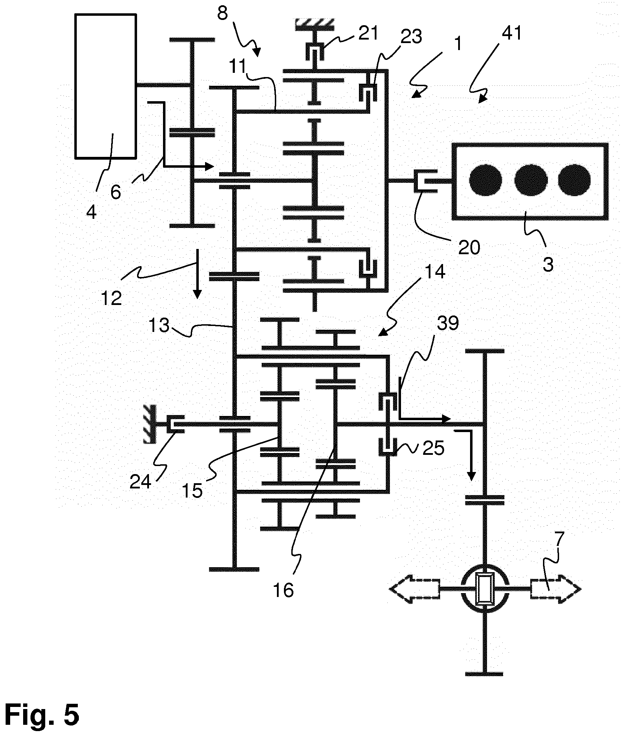

Über das zweite Planetengetriebe 14 wird eine Übersetzung 38, 39 (siehe z. B. Fig. 4 und 5) der von dem ersten Planetengetriebe 8 vorgegebenen Drehzahl und des übertragenen dritten Antriebsdrehmoments 12 realisiert. Dabei wird eine zwei-Gang-Schaltung realisiert, es können also zwei verschiedene Übersetzungen 38, 39 zwischen dem ersten Planetengetriebe 8 und der Antriebswelle 7 über das zweite Planetengetriebe 14 bereitgestellt werden.

Die zwei Planetengetriebe 8, 14 sind unabhängig voneinander aufgebaut, d. h., dass das dritte Antriebsdrehmoment 12 zwischen erstem Planetengetriebe 8 und zweitem Planetengetriebe 14 über zwei, jeweils miteinander kämmende Verzahnungen aufweisende, Komponenten übertragen wird, wobei die erste Komponente (hier der erste Planetenträger 11) dem ersten Planetengetriebe 8 und die zweite Komponente (hier der zweite Planetenträger 13) dem zweiten Planetengetriebe 14 zugeordnet ist.

Die Verbrennungskraftmaschine 3 leitet das erste Antriebsdrehmoment 5 über das erste Hohlrad 10 in das erste Planetengetriebe 8 ein. Die elektrische Maschine 4 leitet das zweite Antriebsdrehmoment 6 über das erste Sonnenrad 9 in das erste Planetengetriebe 8 ein. Hier sind zwischen dem ersten Sonnenrad 9 und der elektrischen Maschine 4 weitere Übersetzungen angeordnet (umfassend das Eingangsritzel 35).

Die Verbrennungskraftmaschine 3 ist über eine erste Kupplung 20 mit dem ersten Hohlrad 10 verbindbar. Die erste Kupplung 20 ist außerhalb eines Gehäuses 22 der Getriebeanordnung 1 angeordnet.

Das erste Hohlrad 10 ist über eine zweite Kupplung 21 mit einem Gehäuse 22 der Getriebeanordnung 1 drehfest verbindbar. Hier wird das erste Hohlrad 10 an dem (nicht drehenden) Gehäuse 22 der Getriebeanordnung 1 festgelegt.

Weiter ist der erste Planetenträger 11 mit dem ersten Hohlrad 10 über eine dritte Kupplung 23 miteinander drehfest verbindbar.

Das zweite Sonnenrad 15 ist über eine vierte Kupplung 24 mit einem Gehäuse 22 der Getriebeanordnung 1 drehfest verbindbar. Hier wird also das zweite Sonnenrad 15 an dem (nicht drehenden) Gehäuse 22 der Getriebeanordnung 1 festgelegt.

Weiter sind das dritte Sonnenrad 16 (bzw. die das dritte Sonnenrad 16 aufweisende Welle) mit dem zweiten Planetenträger 13 über eine fünfte Kupplung 25 miteinander drehfest verbindbar. Die vierte Kupplung 24 und die fünfte Kupplung 25 werden zur Einstellung einer gewünschten Übersetzung 38, 39 betätigt.

Ein viertes Antriebsdrehmoment 27 kann im Rahmen einer Rekuperation zum Aufladen des Speichers 31 durch die als Generator 26 betriebene elektrische Maschine 4 verwertet werden.

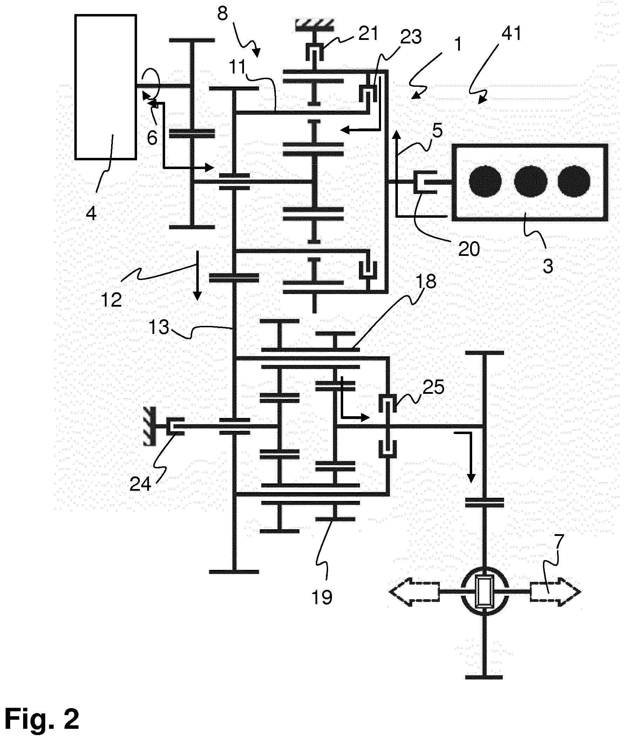

Fig. 2 zeigt das Antriebssystem 41 mit der Getriebeanordnung 1 gemäß Fig. 1 in vereinfachter Darstellung, wobei die Verteilung der Antriebsdrehmomente 5, 6 im CVT-Betriebsverfahren bei eingelegter erster Übersetzung 38 dargestellt ist. Es wird auf die Ausführungen zu Fig. 1 Bezug genommen.

Hier ist die erste Kupplung 20 geschlossen, also Verbrennungskraftmaschine 3 und erstes Hohlrad 10 sind miteinander drehfest verbunden. Weiter befinden sich die zweite Kupplung 21 und die dritte Kupplung 23 im offenen Schaltzustand. Über die Verbrennungskraftmaschine 3 wird ein erstes Antriebsdrehmoment 5, über die elektrische Maschine 4 ein zweites Antriebsdrehmoment 6 bereitgestellt. Über den ersten Planetenträger 11 wird das sich ergebende dritte Antriebsdrehmoment 12 auf den zweiten Planetenträger 13 übertragen.

Für die erste Übersetzung 38 ist die vierte Kupplung 24 geschlossen und die fünfte Kupplung 25 geöffnet. In diesem Fall wird das dritte Antriebsdrehmoment 12 über den zweiten Planetenträger 13 und die an dem zweiten Planetenträger 13 angeordneten zweiten Planetenräder 18 auf das dritte Sonnenrad 16 übertragen, dass mit einer zweiten Verzahnung 19 der zweiten Planetenräder 18 kämmt.

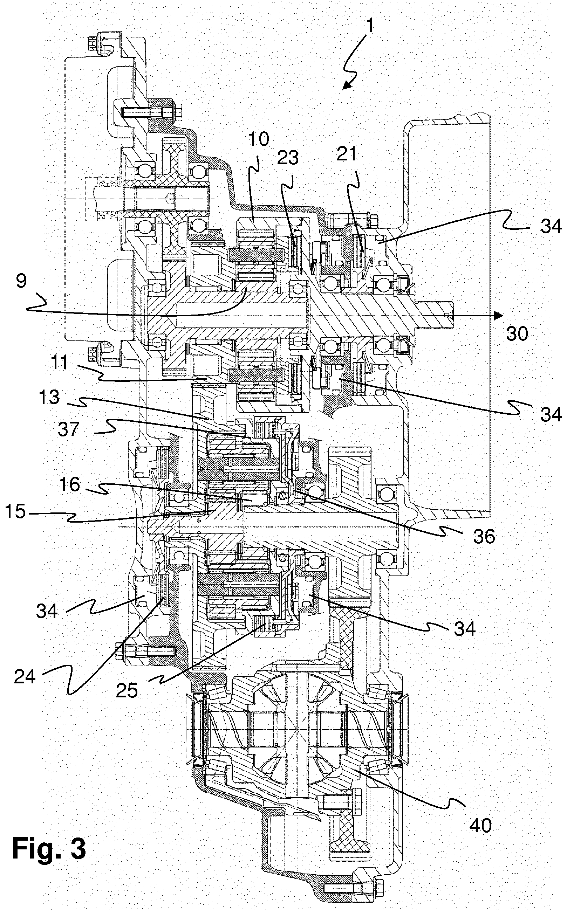

Fig. 3 zeigt die Getriebeanordnung 1 gemäß Fig. 1 und 2 in einer Seitenansicht im Schnitt. Auf die Ausführungen zu Fig. 1 wird verwiesen. Die erste Kupplung 20 ist hier nicht dargestellt. Die Antriebswellen 7 sind hier über ein Differential 40 mit dem dritten Sonnenrad 16 verbunden. Die einzelnen Kupplungen 21, 23, 24, 25 werden jeweils hydraulisch über Aktuatoren 34 (hier Ringkolben) betätigt. Die fünfte Kupplung 25 ist als Lamellenkupplung ausgeführt, wobei der äußere Lamellenträger 36 mit dem dritten Sonnenrad 16 (bzw. mit der das dritte Sonnenrad 16 aufweisenden Welle) drehfest verbunden ist. Der innere Lamellenträger 37 ist mit dem zweiten Planetenträger 13 drehfest verbunden.

Fig. 4 zeigt das Antriebssystem mit der Getriebeanordnung 1 gemäß Fig. 1 bis 3 in vereinfachter Darstellung, wobei die Verteilung der Antriebsdrehmomente 6, 12 im EM-Betriebsverfahren bei eingelegter erster Übersetzung 38 dargestellt ist. Auf die Ausführungen zu Fig. 1 und 2 wird Bezug genommen.

Im Unterschied zu Fig. 2 befinden sich hier die erste Kupplung 20 und die dritte Kupplung 23 im offenen Schaltzustand. Die Verbrennungskraftmaschine 3 ist damit ausgekuppelt. Die zweite Kupplung 21 befindet sich im geschlossenen Schaltzustand, d. h. das erste Hohlrad 10 ist mit dem Gehäuse 22 drehfest verbunden. Das zweite Antriebsdrehmoment 6 der elektrischen Maschine 4 wird damit über das erste Sonnenrad 9 des ersten Planetengetriebes 8 und über die mit dem ersten Sonnenrad 9 kämmenden Verzahnungen der ersten Planetenräder 33, die auf dem ersten Planetenträger 11 angeordnet sind, auf den ersten Planetenträger 11 übertragen. Über den ersten Planetenträger 11 wird das zweite Antriebsdrehmoment 6 auf den zweiten Planetenträger 13 des zweiten Planetengetriebes 14 übertragen.

Weiter ist zur Erzeugung der ersten Übersetzung die vierte Kupplung 24 geschlossen und die fünfte Kupplung 25 offen. In diesem Fall wird das dritte Antriebsdrehmoment 12 über den zweiten Planetenträger 13 und die an dem zweiten Planetenträger 13 angeordneten zweiten Planetenräder 18 auf das dritte Sonnenrad 16 übertragen, dass mit einer zweiten Verzahnung 19 der zweiten Planetenräder 18 kämmt.

Fig. 5 zeigt das Antriebssystem 41 mit der Getriebeanordnung 1 gemäß Fig. 1 bis 4 in vereinfachter Darstellung, wobei die Verteilung der Antriebsdrehmomente 6, 12 im EM-Betriebsverfahren bei eingelegter zweiter Übersetzung 39 dargestellt ist.

Es wird auf die Ausführungen zu Fig. 4 Bezug genommen. Im Unterschied zu Fig. 4 ist hier eine zweite Übersetzung 39 eingelegt. Für die zweite Übersetzung 39 ist die vierte Kupplung 24 geöffnet und die fünfte Kupplung 25 geschlossen. In diesem Fall wird das dritte Antriebsdrehmoment 12 über den zweiten Planetenträger 13 (direkt) auf das dritte Sonnenrad 16 (bzw. auf die das dritte Sonnenrad 16 aufweisende Welle) übertragen.

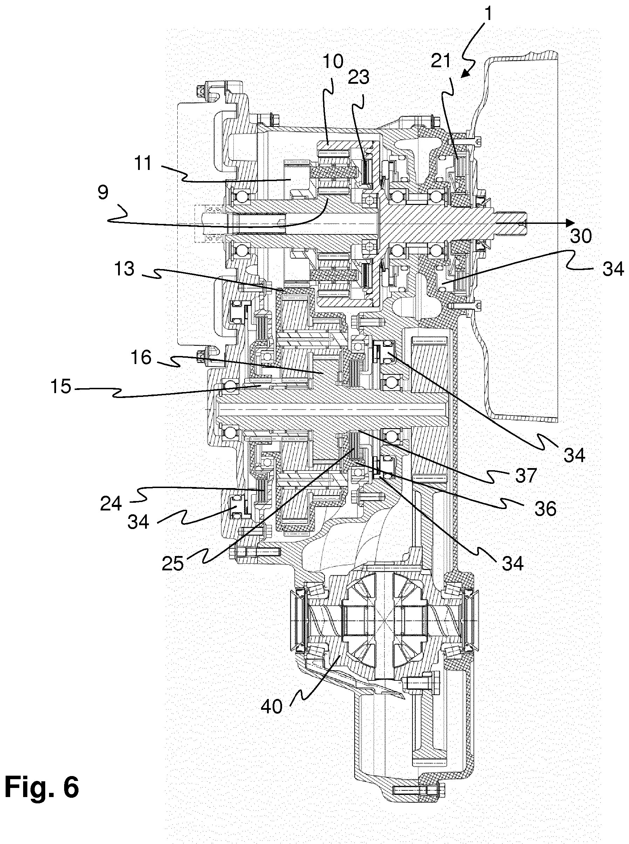

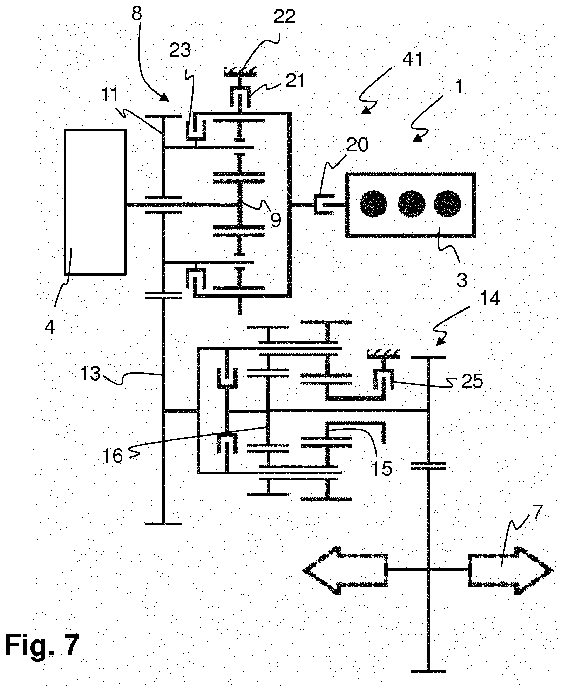

Fig. 6 zeigt die Getriebeanordnung 1 gemäß einer zweiten Ausführungsvariante in einer Seitenansicht im Schnitt. Fig. 7 zeigt das Antriebssystem 41 mit der Getriebeanordnung 1 gemäß Fig. 6 in vereinfachter Darstellung. Die Fig. 6 und 7 werden im Folgenden gemeinsam beschrieben. Diesbezüglich wird auf die Ausführungen zu Fig. 1 bis 3 verwiesen.

Die erste Kupplung 20 ist hier nicht dargestellt. Im Unterschied zu der ersten Ausführungsvariante (siehe Fig. 1 und 3) ist zwischen dem ersten Sonnenrad 9 und der elektrischen Maschine 4 keine Übersetzung angeordnet. Verbrennungsmotor 3 und elektrische Maschine 4 sind hier koaxial zueinander angeordnet.

Die Verbrennungskraftmaschine 3 leitet das erste Antriebsdrehmoment 5 über das erste Hohlrad 10 in das erste Planetengetriebe 8 ein. Die elektrische Maschine 4 leitet das zweite Antriebsdrehmoment 6 über das erste Sonnenrad 9 in das erste Planetengetriebe 8 ein.

Die zwei Planetengetriebe 8, 14 sind unabhängig voneinander aufgebaut, d. h., dass das dritte Antriebsdrehmoment 12 zwischen erstem Planetengetriebe 8 und zweitem Planetengetriebe 14 über zwei, jeweils miteinander kämmende Verzahnungen aufweisende, Komponenten übertragen wird, wobei die erste Komponente (hier der erste Planetenträger 11) dem ersten Planetengetriebe 8 und die zweite Komponente (hier der zweite Planetenträger 13) dem zweiten Planetengetriebe 14 zugeordnet ist.

Das zweite Sonnenrad 15 ist über eine vierte Kupplung 24 mit einem Gehäuse 22 der Getriebeanordnung 1 drehfest verbindbar. Hier wird also das zweite Sonnenrad 15 an dem (nicht drehenden) Gehäuse 22 der Getriebeanordnung 1 festgelegt.

Weiter sind das dritte Sonnenrad 16 (bzw. die das dritte Sonnenrad 16 aufweisende Welle) mit dem zweiten Planetenträger 13 über eine fünfte Kupplung 25 miteinander drehfest verbindbar. Die vierte Kupplung 24 und die fünfte Kupplung 25 werden zur Einstellung einer gewünschten Übersetzung 38, 39 betätigt.

Die Antriebswellen 7 sind hier über ein Differential 40 mit dem dritten Sonnenrad 16 verbunden. Die einzelnen Kupplungen 21, 23, 24, 25 werden jeweils hydraulisch über Aktuatoren 34 (hier Ringkolben) betätigt. Die fünfte Kupplung 25 ist als Lamellenkupplung ausgeführt, wobei - als weiterer Unterschied zu Fig. 3 - hier der innere Lamellenträger 37 mit dem dritten Sonnenrad 16 (bzw. mit der das dritte Sonnenrad 16 aufweisenden Welle) drehfest verbunden ist. Der äußere Lamellenträger 36 ist mit dem zweiten Planetenträger 13 drehfest verbunden.

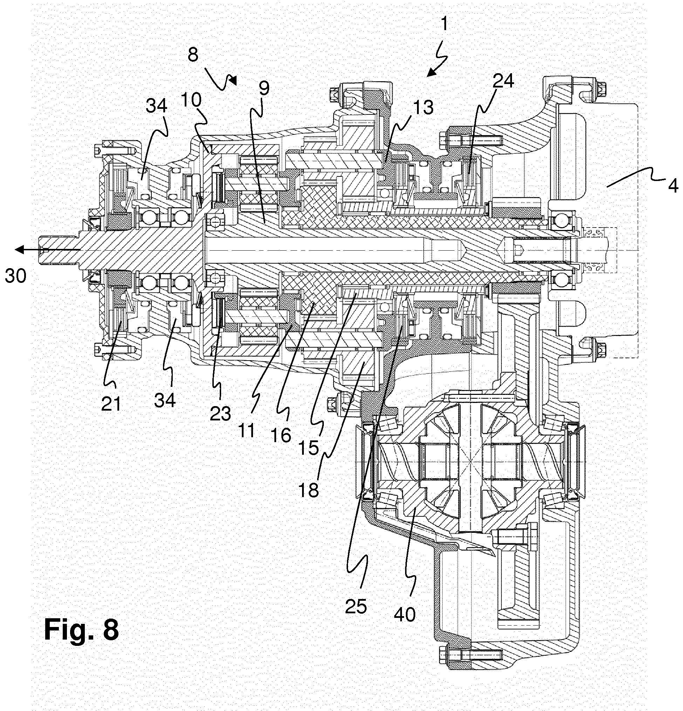

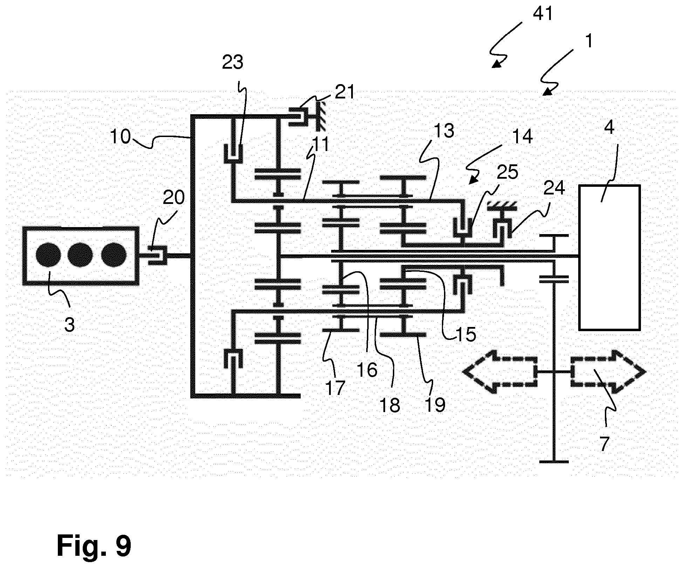

Fig. 8 zeigt eine Getriebeanordnung 1 gemäß einer dritten Ausführungsvariante in einer Seitenansicht im Schnitt. Fig. 9 zeigt das Antriebssystem 41 mit der Getriebeanordnung 1 gemäß Fig. 8 in vereinfachter Darstellung. Die Fig. 8 und 9 werden im Folgenden gemeinsam beschrieben. Diesbezüglich wird auf die Ausführungen zu Fig. 1 bis 3 verwiesen.

Die erste Kupplung 20 ist hier nicht dargestellt. Im Unterschied zu der ersten Ausführungsvariante (siehe Fig. 1 und 3) ist zwischen dem ersten Sonnenrad 9 und der elektrischen Maschine 4 keine Übersetzung angeordnet. Verbrennungsmotor 3 und elektrische Maschine 4 sind koaxial zueinander angeordnet.

Die Verbrennungskraftmaschine 3 leitet das erste Antriebsdrehmoment 5 über das erste Hohlrad 10 in das erste Planetengetriebe 8 ein. Die elektrische Maschine 4 leitet das zweite Antriebsdrehmoment 6 über das erste Sonnenrad 9 in das erste Planetengetriebe 8 ein.

Die zwei Planetengetriebe 8, 14 sind starr miteinander verbunden, d. h., dass das dritte Antriebsdrehmoment 12 zwischen erstem Planetengetriebe 8 und zweitem Planetengetriebe 14 über einen gemeinsamen Planetenträger 11, 13 übertragen wird.

Damit sind über den gemeinsamen Planetenträger 11, 13 beide Planetengetriebe 8, 14 koaxial zueinander angeordnet, d. h. der erste Planetenträger 11 ist koaxial zu dem zweiten Planetenträger 13 angeordnet.

Das zweite Sonnenrad 15 ist über eine vierte Kupplung 24 mit einem Gehäuse 22 der Getriebeanordnung 1 drehfest verbindbar. Hier wird das zweite Sonnenrad 15 an dem (nicht drehenden) Gehäuse 22 der Getriebeanordnung 1 festgelegt.

Im Unterschied zu der ersten und zweiten Ausführungsvariante ist hier das zweite Sonnenrad 15 (bzw. die das zweite Sonnenrad 15 aufweisende Welle) mit dem zweiten Planetenträger 13 über eine fünfte Kupplung 25 miteinander drehfest verbindbar. Die vierte Kupplung 24 und die fünfte Kupplung 25 werden zur Einstellung einer gewünschten Übersetzung 38, 39 betätigt.

Die Antriebswellen 7 sind hier über ein Differential 40 mit dem dritten Sonnenrad 16 verbunden. Die einzelnen Kupplungen 21, 23, 24, 25 werden jeweils hydraulisch über Aktuatoren 34 (hier Ringkolben) betätigt. Die fünfte Kupplung 25 ist als Lamellenkupplung ausgeführt, wobei - im Unterschied zu Fig. 3 - hier der innere Lamellenträger 37 mit dem zweiten Sonnenrad 16 (bzw. mit der das zweite Sonnenrad 15 aufweisenden Welle) drehfest verbunden ist. Der äußere Lamellenträger 36 ist mit dem zweiten Planetenträger 13 drehfest verbunden.

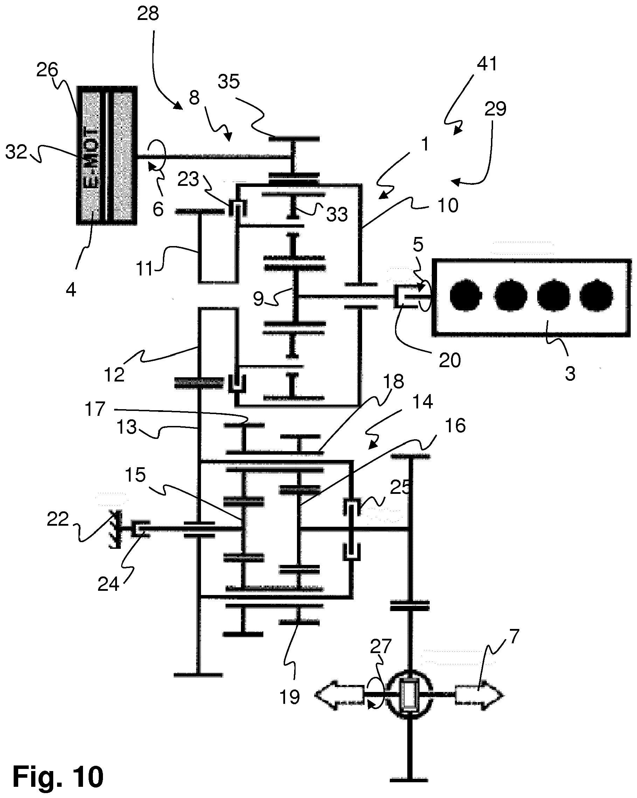

Fig. 10 zeigt ein Antriebssystem 41 mit Getriebeanordnung 1 gemäß einer vierten Ausführungsvariante in vereinfachter Darstellung. Es wird ergänzend auch auf die Ausführungen zu Fig. 1 Bezug genommen. Im Unterschied zu den Ausführungsvarianten gemäß den Fig. 1 bis 9 wird hier das erste Antriebsdrehmoment 5 der Verbrennungskraftmaschine 3 über das erste Sonnenrad 9 in das erste Planetengetriebe 8 eingeleitet. Das zweite Antriebsdrehmoment 6 der elektrischen Maschine 4 wird über das erste Hohlrad 10 in das erste Planetengetriebe 8 eingeleitet. Eine zweite Kupplung 21 ist bei dieser Ausführungsvariante nicht vorgesehen. Über die Verbrennungskraftmaschine 3 wird ein erstes Antriebsdrehmoment 5 und über die elektrische Maschine 4 ein zweites Antriebsdrehmoment 6 bereitgestellt. Über den ersten Planetenträger 11 wird das sich ergebende dritte Antriebsdrehmoment 12 auf den zweiten Planetenträger 13 übertragen.

Für den allein elektromotorischen Betrieb (EM) wird die erste Kupplung 20 geöffnet und die dritte Kupplung 23 geschlossen. Die bei den anderen Ausführungsvarianten benötigte Funktion der zweiten Kupplung 21 ist hier nicht erforderlich.

### Bezugszeichenliste

- 1: Getriebeanordnung
- 2: Hybridfahrzeug
- 3: Verbrennungskraftmaschine
- 4: elektrische Maschine
- 5: erstes Antriebsdrehmoment
- 6: zweites Antriebsdrehmoment
- 7: Antriebswelle
- 8: erstes Planetengetriebe
- 9: erstes Sonnenrad
- 10: erstes Hohlrad
- 11: erster Planetenträger
- 12: drittes Antriebsdrehmoment
- 13: zweiter Planetenträger
- 14: zweites Planetengetriebe
- 15: zweites Sonnenrad
- 16: drittes Sonnenrad
- 17: erste Verzahnung
- 18: zweites Planetenrad
- 19: zweite Verzahnung
- 20: erste Kupplung
- 21: zweite Kupplung
- 22: Gehäuse
- 23: dritte Kupplung
- 24: vierte Kupplung
- 25: fünfte Kupplung
- 26: Generator
- 27: viertes Antriebsdrehmoment
- 28: erste Seite
- 29: zweite Seite
- 30: axiale Richtung
- 31: Speicher
- 32: Elektromotor
- 33: erstes Planetenrad
- 34: Aktuator
- 35: Eingangsritzel
- 36: äußerer Lamellenträger
- 37: innerer Lamellenträger
- 38: erste Übersetzung
- 39: zweite Übersetzung
- 40: Differential
- 41: Antriebssystem

## Patentansprüche

1. Getriebeanordnung (1) für ein Hybridfahrzeug (2) mit einer Verbrennungskraftmaschine (3) und einer elektrischen Maschine (4), wobei über die Getriebeanordnung (1) ein erstes Antriebsdrehmoment (5) der Verbrennungskraftmaschine (3) und ein zweites Antriebsdrehmoment (6) der elektrischen Maschine (4) auf zumindest eine Antriebswelle (7) des Hybridfahrzeugs (2) übertragbar ist, wobei die Getriebeanordnung (1) ein erstes Planetengetriebe (8) mit den ersten Komponenten erstes Sonnenrad (9), erstes Hohlrad (10) und erster Planetenträger (11) umfasst, **dadurch gekennzeichnet, dass** über den ersten Planetenträger (11) ein drittes Antriebsdrehmoment (12) auf einen zweiten Planetenträger (13) eines zweiten Planetengetriebes (14) übertragbar ist, wobei das zweite Planetengetriebe (14) die zweiten Komponenten zweiter Planetenträger (13), zweites Sonnenrad (15) und drittes Sonnenrad (16) aufweist, wobei das zweite Sonnenrad (15) mit einer ersten Verzahnung (17) eines zweiten Planetenrades (18) und das dritte Sonnenrad (16) mit einer zweiten Verzahnung (19) des zweiten Planetenrades (18) kämmt, wobei über das dritte Sonnenrad (16) die Antriebswelle (7) des Hybridfahrzeugs (2) antreibbar ist.

2. Getriebeanordnung (1) nach Patentanspruch 1, wobei die Verbrennungskraftmaschine (3) über eine erste Kupplung (20) mit dem ersten Hohlrad (10) verbindbar ist.

3. Getriebeanordnung (1) nach einem der vorhergehenden Patentansprüche, wobei zumindest zwei Komponenten des ersten Planetengetriebes (8) aus der Gruppe: erstes Sonnenrad (9), erstes Hohlrad (10) und erster Planetenträger (11) über eine dritte Kupplung (23) miteinander drehfest verbindbar sind.

4. Getriebeanordnung (1) nach einem der vorhergehenden Patentansprüche, wobei das zweite Sonnenrad (15) über eine vierte Kupplung (24) mit einem Gehäuse (22) der Getriebeanordnung (1) drehfest verbindbar ist.

5. Getriebeanordnung (1) nach einem der vorhergehenden Patentansprüche, wobei zumindest zwei Komponenten des zweiten Planetengetriebes (14) aus der Gruppe: zweiter Planetenträger (13), zweites Sonnenrad (15) und drittes Sonnenrad (16) über eine fünfte Kupplung (25) miteinander drehfest verbindbar sind.

6. Getriebeanordnung (1) nach einem der vorhergehenden Patentansprüche, wobei das dritte Sonnenrad (16) durch das dritte Antriebsdrehmoment (12) antreibbar ist, wobei das dritte Antriebsdrehmoment (12)
a. ausschließlich von der Verbrennungskraftmaschine (3); oder
b. ausschließlich von der elektrischen Maschine (4); oder
c. von Verbrennungskraftmaschine (3) und elektrischer Maschine (4) bereitstellbar ist.

7. Getriebeanordnung (1) nach einem der vorhergehenden Patentansprüche, wobei das erste Planetengetriebe (8) und das zweite Planetengetriebe (14)
a. nebeneinander; oder
b. entlang einer axialen Richtung (30) hintereinander; oder
c. entlang einer axialen Richtung (30) hintereinander mit koaxialer Anordnung von erstem Planetenträger (11) und zweitem Planententräger (13)
angeordnet sind.

8. Getriebeanordnung (1) nach einem der vorhergehenden Patentansprüche, wobei das erste Hohlrad (10) über eine zweite Kupplung (21) mit einem Gehäuse (22) der Getriebeanordnung (1) drehfest verbindbar ist.

9. Antriebssystem (41) für ein Hybridfahrzeug (2), zumindest aufweisend eine Verbrennungskraftmaschine (3), eine elektrische Maschine (4) sowie eine Getriebeanordnung (1) nach einem der vorhergehenden Patentansprüche.

10. Antriebssystem (41) nach Patentanspruch 9, wobei die Verbrennungskraftmaschine (3) das erste Antriebsdrehmoment (5) über das erste Hohlrad (10) in das erste Planetengetriebe (8) einleitet.

11. Antriebssystem (41) nach Patentanspruch 9 oder 10, wobei die elektrische Maschine (4) das zweite Antriebsdrehmoment (6) über das erste Sonnenrad (9) in das erste Planetengetriebe (8) einleitet.

12. Antriebssystem (41) für ein Hybridfahrzeug (2), zumindest aufweisend eine Verbrennungskraftmaschine (3), eine elektrische Maschine (4) sowie eine Getriebeanordnung (1) nach einem der Patentansprüche 1 bis 7, wobei die Verbrennungskraftmaschine (3) das erste Antriebsdrehmoment (5) über das erste Sonnenrad (9) in das erste Planetengetriebe (8) einleitet und wobei die elektrische Maschine (4) das zweite Antriebsdrehmoment (6) über das erste Hohlrad (10) in das erste Planetengetriebe (8) einleitet.

13. Antriebssystem (41) nach Patentanspruch 12, wobei die Verbrennungskraftmaschine (3) über eine erste Kupplung (20) mit dem ersten Hohlrad (10) verbindbar ist und zumindest zwei Komponenten des ersten Planetengetriebes (8) aus der Gruppe: erstes Sonnenrad (9), erstes Hohlrad (10) und erster Planetenträger (11) über eine dritte Kupplung (23) miteinander drehfest verbindbar sind; wobei Komponenten des ersten Planetengetriebes (8) ausschließlich über die erste Kupplung (20) und die dritte Kupplung (23) mit weiteren Komponenten des Antriebssystem (41) verbindbar sind.

14. Antriebssystem (41) nach einem der Patentansprüche 9 bis 13, wobei die elektrische Maschine (4) als Generator (26) betreibbar ist, wobei ein erstes Antriebsdrehmoment (5) der Verbrennungskraftmaschine (3) oder ein viertes Antriebsdrehmoment (27) der Antriebswelle (7) über den Generator (26) in elektrische Energie umwandelbar ist.

15. Antriebssystem nach einem der Patentansprüche 9 bis 14, wobei die elektrische Maschine (4) an einer ersten Seite (28) und die Verbrennungskraftmaschine (3) aneinander gegenüberliegenden zweiten Seite (29) der Getriebeanordnung (1) angeordnet sind.

16. Hybridfahrzeug (2) mit einer Verbrennungskraftmaschine (3) und einer elektrischen Maschine (4) sowie einer Getriebeanordnung (1) nach einem der Patentansprüche 1 bis 8, wobei die elektrische Maschine (4) als Generator (26) zum Aufladen eines Speichers (31) für elektrische Energie und als Elektromotor (32) zum Antrieb einer Antriebswelle (7) des Hybridfahrzeugs (2) betreibbar ist.

## Claims

1. Transmission arrangement (1) for a hybrid vehicle (2) having an internal combustion engine (3) and an electric machine (4), wherein a first drive torque (5) of the internal combustion engine (3) and a second drive torque (6) of the electric machine (4) are transmissible to at least one drive shaft (7) of the hybrid vehicle (2) by means of the transmission arrangement (1), wherein the transmission arrangement (1) comprises a first planetary transmission (8) with the first components first sun gear (9), first ring gear (10) and first planet carrier (11), **characterized in that** a third drive torque (12) is transmissible to a second planet carrier (13) of a second planetary transmission (14) by means of the first planet carrier (11), wherein the second planetary transmission (14) has the second components second planet carrier (13), second sun gear (15) and third sun gear (16), wherein the second sun gear (15) meshes with a first toothing (17) of a second planet gear (18) and the third sun gear (16) meshes with a second toothing (19) of the second planet gear (18), wherein the drive shaft (7) of the hybrid vehicle (2) is driveable by means of the third sun gear (16).

2. Transmission arrangement (1) according to claim 1, wherein the internal combustion engine (3) is connectable to the first ring gear (10) by means of a first clutch (20).

3. Transmission arrangement (1) according to any of the preceding claims, wherein at least two components of the first planetary transmission (8) from the group: first sun gear (9), first ring gear (10) and first planet carrier (11) are connectable rotationally conjointly to one another by means of a third clutch (23).

4. Transmission arrangement (1) according to any of the preceding claims, wherein the second sun gear (15) is connectable rotationally conjointly to a housing (22) of the transmission arrangement (1) by means of a fourth clutch (24).

5. Transmission arrangement (1) according to any of the preceding claims, wherein at least two components of the second planetary transmission (14) from the group:
second planet carrier (13), second sun gear (15) and third sun gear (16) are connectable rotationally conjointly to one another by means of a fifth clutch (25).

6. Transmission arrangement (1) according to any of the preceding claims, wherein the third sun gear (16) is driveable by the third drive torque (12), wherein the third drive torque (12) is providable
a. by the internal combustion engine (3) alone; or
b. by the electric machine (4) alone; or
c. by the internal combustion engine (3) and electric machine (4).

7. Transmission arrangement (1) according to any of the preceding claims, wherein the first planetary transmission (8) and the second planetary transmission (14) are arranged
a. adjacent to one another; or
b. one behind the other along an axial direction (30); or
c. one behind the other along an axial direction (30) with a coaxial arrangement of first planet carrier (11) and second planet carrier (13).

8. Transmission arrangement (1) according to any of the preceding claims, wherein the first ring gear (10) is connectable rotationally conjointly by means of a second clutch (21) to a housing (22) of the transmission arrangement (1).

9. Drive system (41) for a hybrid vehicle (2), at least having an internal combustion engine (3), an electric machine (4) and a transmission arrangement (1) according to any of the preceding claims.

10. Drive system (41) according to claim 9, wherein the internal combustion engine (3) introduces the first drive torque (5) into the first planetary transmission (8) via the first ring gear (10).

11. Drive system (41) according to claim 9 or 10, wherein the electric machine (4) introduces the second drive torque (6) into the first planetary transmission (8) via the first sun gear (9).

12. Drive system (41) for a hybrid vehicle (2), at least having an internal combustion engine (3), an electric machine (4) and a transmission arrangement (1) according to any of claims 1 to 7, wherein the internal combustion engine (3) introduces the first drive torque (5) into the first planetary transmission (8) via the first sun gear (9), and wherein the electric machine (4) introduces the second drive torque (6) into the first planetary transmission (8) via the first ring gear (10).

13. Drive system (41) according to claim 12, wherein the internal combustion engine (3) is connectable to the first ring gear (10) by means of a first clutch (20) and at least two components of the first planetary transmission (8) from the group: first sun gear (9), first ring gear (10) and first planet carrier (11) are connectable rotationally conjointly to one another by means of a third clutch (23); wherein components of the first planetary transmission (8) are connectable to further components of the drive system (41) exclusively by means of the first clutch (20) and the third clutch (23).

14. Drive system (41) according to any of claims 9 to 13, wherein the electric machine (4) is operable as a generator (26), wherein a first drive torque (5) of the internal combustion engine (3) or a fourth drive torque (27) of the drive shaft (7) can be converted into electrical energy by means of the generator (26).

15. Drive system according to any of claims 9 to 14, wherein the electric machine (4) is arranged at a first side (28) and the internal combustion engine (3) is arranged at an opposite, second side (29) of the transmission arrangement (1).

16. Hybrid vehicle (2) having an internal combustion engine (3) and an electric machine (4) and a transmission arrangement (1) according to any of claims 1 to 8, wherein the electric machine (4) is operable as a generator (26) for charging an accumulator (31) for electrical energy and as an electric motor (32) for driving a drive shaft (7) of the hybrid vehicle (2).

## Revendications

1. Ensemble de transmission (1) destiné à un véhicule hybride (2) comportant un moteur à combustion interne (3) et une machine électrique (4), un premier couple d'entraînement (5) du moteur à combustion interne (3) et un deuxième couple d'entraînement (6) de la machine électrique (4) pouvant être transmis à au moins un arbre d'entraînement (7) du véhicule hybride (2) par le biais de l'ensemble de transmission (1), l'ensemble de transmission (1) comportant une première transmission planétaire (8) dotée des premiers composants que sont une première roue planétaire (9), une première couronne (10) et un premier porte-satellites (11), **caractérisé en ce qu'**un troisième couple d'entraînement (12) peut être transmis à un deuxième porte-satellites (13) d'une deuxième transmission planétaire (14) par le biais du premier porte-satellites (11), la deuxième transmission planétaire (14) comprenant les deuxièmes composants que sont un deuxième porte-satellites (13), une deuxième roue planétaire (15) et une troisième roue planétaire (16), la deuxième roue planétaire (15) s'engrenant avec une première denture (17) d'une deuxième roue planétaire (18) et la troisième roue planétaire (16) s'engrenant avec une deuxième denture (19) de la deuxième roue planétaire (18), l'arbre d'entraînement (7) du véhicule hybride (2) pouvant être entraîné par le biais de la troisième roue planétaire (16).

2. Ensemble de transmission (1) selon la revendication 1, le moteur à combustion interne (3) pouvant être relié à la première couronne (10) par le biais d'un premier embrayage (20).

3. Ensemble de transmission (1) selon l'une des revendications précédentes, au moins deux composants de la première transmission planétaire (8) parmi le groupe :
première roue planétaire (9), première couronne (10) et premier porte-satellites (11) pouvant être reliés l'un à l'autre de manière solidaire en rotation par le biais d'un troisième embrayage (23).

4. Ensemble de transmission (1) selon l'une des revendications précédentes, la deuxième roue planétaire (15) pouvant être reliée de manière solidaire en rotation à un carter (22) de l'ensemble de transmission (1) par le biais d'un quatrième embrayage (24).

5. Ensemble de transmission (1) selon l'une des revendications précédentes, au moins deux composants de la deuxième transmission planétaire (14) parmi le groupe :
deuxième porte-satellites (13), deuxième roue planétaire (15) et troisième roue planétaire (16) pouvant être reliés l'un à l'autre de manière solidaire en rotation par le biais d'un cinquième embrayage (25).

6. Ensemble de transmission (1) selon l'une des revendications précédentes, la troisième roue planétaire (16) pouvant être entraînée par le biais du troisième couple d'entraînement (12), le troisième couple d'entraînement (12) pouvant être produit
a. exclusivement par le moteur à combustion interne (3) ; ou
b. exclusivement par la machine électrique (4) ; ou
c. par le moteur à combustion interne (3) et la machine électrique (4).

7. Ensemble de transmission (1) selon l'une des revendications précédentes, la première transmission planétaire (8) et la deuxième transmission planétaire (14) étant disposées
a. l'une à côté de l'autre ; ou
b. l'une derrière l'autre le long d'une direction axiale (30) ; ou
c. l'une derrière l'autre le long d'une direction axiale (30) avec agencement coaxial du premier porte-satellites (11) et du deuxième porte-satellites (13).

8. Ensemble de transmission (1) selon l'une des revendications précédentes, la première couronne (10) pouvant être reliée de manière solidaire en rotation à un carter (22) de l'ensemble de transmissions (1) par le biais d'un deuxième embrayage (21).

9. Système d'entraînement (41) pour un véhicule hybride (2), comprenant au moins un moteur à combustion interne (3), une machine électrique (4) ainsi qu'un ensemble de transmission (1) selon l'une des revendications précédentes.

10. Système d'entraînement (41) selon la revendication 9, le moteur à combustion interne (3) introduisant le premier couple d'entraînement (5) dans la première transmission planétaire (8) par le biais de la première couronne (10).

11. Système d'entraînement (41) selon la revendication 9 ou 10, la machine électrique (4) introduisant le deuxième couple d'entraînement (6) dans la première transmission planétaire (8) par le biais de la première roue planétaire (9).

12. Système d'entraînement (41) pour un véhicule hybride (2), comprenant au moins un moteur à combustion interne (3), une machine électrique (4) ainsi qu'un ensemble de transmission (1) selon l'une des revendications 1 à 7, le moteur à combustion interne (3) introduisant le premier couple d'entraînement (5) dans la première transmission planétaire (8) par le biais de la première roue planétaire (9) et la machine électrique (4) introduisant le deuxième couple d'entraînement (6) dans la première transmission planétaire (8) par le biais de la première couronne (10).

13. Système d'entraînement (41) selon la revendication 12, le moteur à combustion interne (3) pouvant être relié à la première couronne (10) par le biais d'un premier embrayage (20) et au moins deux composants de la première transmission planétaire (8) parmi le groupe : première roue planétaire (9), première couronne (10) et premier porte-satellites (11) pouvant être reliés les uns aux autres de manière solidaire en rotation par le biais d'un troisième embrayage (23) ; des composants de la première transmission planétaire (8) pouvant être reliés à d'autres composants du système d'entraînement (41) exclusivement par le biais du premier embrayage (20) et du troisième embrayage (23).

14. Système d'entraînement (41) selon l'une des revendications 9 à 13, la machine électrique (4) pouvant fonctionner comme générateur (26), un premier couple d'entraînement (5) du moteur à combustion interne (3) ou un quatrième couple d'entraînement (27) de l'arbre d'entraînement (7) pouvant être converti en énergie électrique par le biais du générateur (26).

15. Système d'entraînement selon l'une des revendications 9 à 14, la machine électrique (4) étant disposée sur un premier côté (28) et le moteur à combustion interne (3) étant disposé sur un deuxième côté opposé (29) de l'ensemble de transmission (1).

16. Véhicule hybride (2) comportant un moteur à combustion interne (3) et une machine électrique (4) ainsi qu'un ensemble de transmission (1) selon l'une des revendications 1 à 8, la machine électrique (4) pouvant fonctionner comme générateur (26) pour charger un accumulateur (31) d'énergie électrique et comme un moteur électrique (32) pour l'entraînement d'un arbre d'entraînement (7) du véhicule hybride (2).
